# EUROPEAN PATENT SPECIFICATION

(11) **EP 3 805 811 B1**
(45) Date of publication and mention of the grant of the patent: **14.02.2024**
(21) Application number: 19800911.0
(22) Date of filing: 15.10.2019
(51) Int. Cl.: G01V 1/38, G01V 1/20, G01V 1/18, G01V 1/22

(54) **MARINE SEISMIC DATA ACQUISITION CONTROL DEVICE**
STEUERVORRICHTUNG ZUR ERFASSUNG MARINER SEISMISCHER DATEN
DISPOSITIF DE COMMANDE D'ACQUISITION DE DONNÉES SISMIQUES MARINES

(30) Priority: 26.08.2019 CN 201910789836
(43) Date of publication of application: 14.04.2021
(73) Proprietor: First Institute of Oceanography, Ministry of Natural Resources, Qingdao City 266061 (CN)
(72) Inventor: LIU, Chenguang, Qingdao City 266061 (CN); LIU, Baohua, Qingdao City 266061 (CN); PEI, Yanliang, Qingdao City 266061 (CN); XIE, Qiuhong, Qingdao City 266061 (CN); KAN, Guangming, Qingdao City 266061 (CN); LIAN, Yanhong, Qingdao City 266061 (CN); CHEN, Zili, Qingdao City 266061 (CN)
(74) Representative: Chung, Hoi Kan
(86) International application number: PCT/CN2019/111215
(87) International publication number: WO 2021/035896

(56) References cited:
- EP-A1- 3 339 911
- WO-A2-98/07049
- CN-A- 102 778 694
- CN-A- 103 344 992
- CN-A- 106 990 431
- CN-A- 107 918 121
- CN-A- 107 918 121
- CN-A- 108 828 671
- US-A- 4 309 763
- US-A- 5 058 080
- US-A- 5 206 835
- US-A- 6 138 075

## Description

### Technical Field

The invention relates to the technical field of marine reflection seismic exploration, in particular to a marine seismic data acquisition control device.

### Background Art

Marine reflection seismic exploration is an important geophysical exploration method, which has important strategic significance for resource investigation, sedimentary structural unit division and engineering geological disaster investigation, especially marine geological structure exploration, marine oil and gas and gas hydrate exploration and submarine disaster geological phenomenon exploration. In general, a seismic source is needed to excite seismic waves, and information of a stratum below the sea floor is obtained by collecting seismic source signals reflected by the sea floor. Therefore, the accuracy of the seismic data acquisition control device for data acquisition and the timeliness for data processing are very important for marine research, sea floor detection and analysis.

US Patent No. 5,206,835 entitled "modular device for reception, the acquisition and the transmission of seismic data with several multiplexing levels" discloses a modular device for the reception, the acquisition and the transmission, to a central control and recording unit, of signals picked up by a very large number of seismic acoustic receivers distributed along a streamer of great length under water in operation.

US Patent No. 4,309,763 entitled "digital sonobuoy" discloses an underwater seismic exploration system utilizing a sonobuoy for the radio telemetry of seismic data signals to a remotely located receiver.

US Patent No. 5,058,080 entitled "multiple transmission path seismic telemetering system" discloses a marine seismic data acquisition system, a plurality of seismic data transmission paths is utilized to transmit seismic data to a central recording unit from seismic data acquisition modules positioned along the length of a cable.

China Patent application No. CN107918121A entitled "digital acquisition device and underwater acoustic towed array device" discloses a digital acquisition device comprises multiple data acquisition and processing mechanisms, multiple hydrophone channels and multiple hydrophones.

EP Patent application No. EP3339911A1 entitled "reservoir acquisition system with concentrator" discloses a seismic streamer including an outer sheath that forms an interior region of the seismic streamer of which a portion is filled with a gel or liquid. WO98/07049A2 entitled "multicomponent streamer" discloses A process including transmitting remote data signals independently from each node of the plurality of permanently coupled remote sensor nodes to a concentrator of the data signals; and transmitting concentrated data signals from the concentrator to a recorder.

In the prior art, the accuracy for seismic data acquisition and the timeliness for data processing cannot meet the increasingly refined requirements of marine research.

### Summary of the Invention

Therefore, the invention provides a marine seismic data acquisition control device which can acquire more refined seismic signals so as to obtain good detection result.

In order to achieve the purpose, the marine seismic data acquisition control device provided by the invention comprises a power module, a control module, a communication module, a test module and a data module; wherein the power module is an electric energy supply device of the marine seismic data acquisition control device and is configured for converting electric energy into different voltages to be supplied to each component of the marine seismic data acquisition control device; the communication module is configured for executing data transmission and compilation and transmission channel equalization and management; the control module carries out data acquisition, storage, transmission and system self-detection according to a control instruction, stores a detection result according to requirements and transmits the detection result to a data transmission unit by the communication module; the data module is configured for receiving seismic data acquired by a seismic data acquisition element, namely hydrophones and carrying out signal filtering, amplification, digitization and storage; and the test module is configured for executing a performance test of the marine seismic data acquisition control device and a performance test of the seismic data acquisition element.

Further, the data module comprises at least one data acquisition channel coupled to the seismic data acquisition element, each data acquisition channel including a 32-bit analog-to-digital converter, a switching circuit, a signal conditioning circuit, and a signal acquisition circuit. Further, the seismic data acquisition element comprises a hydrophone configured for performing acquisition of the seismic data and converting the seismic data into electrical signals, and the data module carries out digital processing on the seismic data processed by the electrical signal by the 32-bit analog-to-digital converter, sends the seismic data to the control module for storage, the seismic data being sent to the data transmission unit by the communication module; and each of the data acquisition channels corresponds to at least one hydrophone.

Further, each of the data modules controls four of the acquisition channels correspondingly, and each of the acquisition channels corresponds to four to six hydrophones connected in series or in parallel.

Further, the control instruction is sent by a multi-channel digital seismic acquisition main control to the control module via a streamer controller, and the power module draws electric energy from the streamer controller.

Further, the test module is configured for executing a performance test of the marine seismic data acquisition control device and a performance test of the seismic data acquisition element, specifically, comprising sending test waves by the test module according to an instruction from the multi-channel digital seismic acquisition main control, receiving the test waves by each of the data acquisition channels in the data module, and analyzing response waveforms of all the data acquisition channels for determining the consistency of the data acquisition channels.

Further, the test wave is a sine wave or a sawtooth wave.

Further, the main controller and the data processor of the control module are a high-performance embedded ARM.

Further, the power module comprises an input protection circuit for preventing circuit damage due to input over/under voltage and over/under current, and a voltage regulation circuit for performing voltage conversion to meet required operating voltages of each component of the marine seismic data acquisition control device.

Further, the communication module comprises a data transmission and distribution circuit, a drive circuit, a receiving circuit and an equalization circuit.

The marine seismic data acquisition control device provided by the invention comprises a power module, a control module, a communication module, a test module and a data module and is configured for effectively executing acquisition, signal conversion, storage and transmission of the seismic data, so as to ensure the accuracy of the seismic data acquisition and then the reliability and the acquisition reliability of data. Due to the arrangement of a plurality of acquisition channels, random noise in data acquisition can be effectively suppressed by each of the acquisition channels corresponding to an appropriate number of seismic data acquisition elements, namely hydrophones, and more refined seismic signals can be obtained from a 32-bit analog-to-digital converter, so that the reliability and the credibility of the data are ensured, and good detection information can be obtained by exploration.

### Brief Description of the Drawings

Various other advantages and benefits will become apparent to those of ordinary skill in the art upon reading the following detailed description of the preferred embodiments. The drawings are only for the purpose of illustrating preferred embodiments and are not to be construed as limiting the invention. Also, throughout the drawings, like reference numerals designate like parts. In the drawings:
Fig. 1 is a schematic diagram showing an operation principle of a marine seismic data acquisition control device provided by an embodiment of the present invention;
Fig. 2 is a schematic diagram showing an application principle of the marine seismic data acquisition control device provided by the embodiment of the invention.

### Detailed Description

The invention is directed to solve the problems in the prior art and provides a marine seismic data acquisition control device which can acquire more refined seismic signals so as to obtain good detection information.

In order to further illustrate the technical means and effects of the present invention in order to achieve the intended purposes thereof, detailed description will now be made as follows to the embodiments, structures, features and effects thereof according to the present invention, in combination with the accompanying drawings and preferred embodiments. In the following description, different "one embodiment" or "an embodiment" means not necessarily the same embodiment. Furthermore, the features, structures, or characteristics of one or more embodiments may be combined in any suitable form.

The term "and/or" herein is merely an association relationship that describes associated objects, meaning that there may be three relationships, e.g., A and/or B is specifically understood that A and B may be included together, A may be present alone or B may be present alone, and any of the above three cases may be provided.

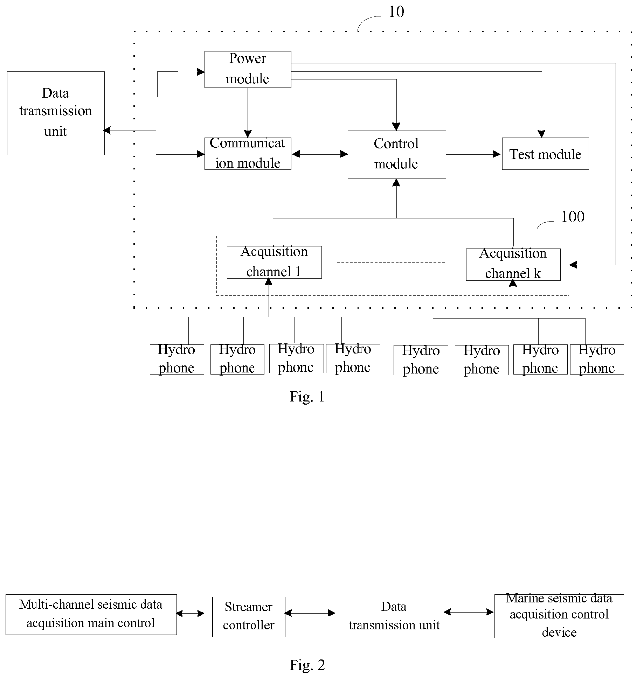

Referring to Fig. 1, an embodiment of the present invention provides a marine seismic data acquisition control device 10 including a power module, a control module, a communication module, a test module, and a data module;
the power module is an electric energy supply device of the marine seismic data acquisition control device and is configured for converting electric energy into different voltages to be supplied to each component of the marine seismic data acquisition control device; the communication module is configured for executing data transmission and compilation and transmission channel equalization and management; the control module carries out data acquisition, storage, transmission and system self-detection according to a control instruction, stores a detection result according to requirements and transmits the detection result to a data transmission unit by the communication module; the data module 100 is configured for receiving seismic data acquired by a seismic data acquisition element and carrying out signal filtering, amplification, digitization and storage; and the test module is configured for executing a performance test of the marine seismic data acquisition control device and a performance test of the seismic data acquisition element.

The marine seismic data acquisition control device provided by the embodiment of the invention comprises a power module, a control module, a communication module, a test module and a data module, can effectively execute acquisition, storage and transmission of seismic data, ensuring the accuracy of seismic data acquisition and then the reliability and the credibility of data, so as to obtain good seismic data detection information.

Referring further to Fig. 1, the data module includes at least one data acquisition channel coupled to the seismic data acquisition element, each data acquisition channel including a switching circuit, a signal conditioning circuit, and a signal acquisition circuit (not shown in Fig. 1).

Further, the seismic data acquisition element comprises a hydrophone configured for performing acquisition of the seismic data and converting the seismic data into electrical signals, and the data module carries out digital processing on the seismic data processed by the electrical signal by the 32-bit analog-to-digital converter, sends the seismic data to the control module for storage, the seismic data being sent to the data transmission unit by the communication module; and each of the data acquisition channels corresponds to at least one hydrophone. According to the embodiment of the invention, more refined seismic signals can be obtained by a 32-bit analog-to-digital converter.

Preferably, each of the data modules controls four of the acquisition channels correspondingly, each of the acquisition channels corresponding to four to six hydrophones connected in series or in parallel, wherein the relationship of series and parallel connection is the same as the principle in the circuit and will not be described and illustrated in detail here. It should also be noted that although each acquisition channel corresponds to four hydrophones as shown in Fig. 1, this is not to be construed as requiring only four hydrophones per acquisition channel. In practical application, the number of hydrophones corresponding to the acquisition channels is flexibly designed and selected according to specific requirements. Preferably, in order to suppress random noise, each acquisition channel corresponds to four to six hydrophones.

For a better understanding of the practical application of embodiments of the present invention, referring to Figure 2, the control instruction received by the control module is sent out by a multi-channel digital seismic acquisition main control via a streamer controller, and the power module draws electric energy from the streamer controller.

Further, the test module is configured for executing a performance test of the marine seismic data acquisition control device and a performance test of the seismic data acquisition element, specifically, comprising sending test waves by the test module according to the control instruction, receiving the test waves by each of the data acquisition channels in the data module, and analyzing response waveforms of all the data acquisition channels for determining the consistency of the data acquisition channels. In practical application, when the control instruction sent by a multi-channel digital seismic acquisition main control is a self-detection instruction, the test module sends test waves after receiving the self-detection instruction, the test wave can be set as a sine wave or a sawtooth wave, each of the data acquisition channels in the data module receives the test waves and responds, and technical personnel can determine the consistency of the data acquisition channels by analyzing response waveforms of all the data acquisition channels. Preferably, the main controller and the data processor of the control module are a high-performance embedded ARM.

Preferably, the power module comprises an input protection circuit for preventing circuit damage due to input over/under voltage and over/under current, and a voltage regulation circuit for performing voltage conversion to meet required operating voltages of each component of the marine seismic data acquisition control device.

Preferably, the communication module comprises data transmission and distribution circuit, drive circuit, receiving circuit, and equalization circuit.

In the actual marine seismic data exploration, a plurality of marine seismic data acquisition control devices and data transmission units correspondingly connected therewith are arranged; the number of the marine seismic data acquisition control devices is set to be n, and n is a positive integer greater than or equal to 1; the seismic data are sent from the last data transmission unit, i.e. the n^{th} data transmission unit, to the previous data transmission unit, i.e. the n-1^{th} data transmission unit, and the data of the two units are packaged and then transmitted to the n-2^{th} data transmission unit. The three units of data are packaged and then transmitted forward, and so on, until transmitted to the multi-channel digital seismic acquisition main control. According to the transmission mode, the transmission distance is relatively short, the error rate of data transmission can be reduced to improve the quality of data transmission. Moreover, the data is transmitted forward from the last data transmission unit, and each data transmission unit can label the data to facilitate the arrangement of the data. It should be noted that only signal flow paths for data transmission are described herein. It does not include descriptions of data conversion during data transmission therein, such as conversion from analog quantity to digital quantity, and from digital quantity to optical signal for faster and more accurate transmission, etc. is not described in detail.

The marine seismic data acquisition control device provided by the embodiment of the invention comprises a power module, a control module, a communication module, a test module and a data module and is configured for effectively executing acquisition, signal conversion, storage and transmission of the seismic data, so as to ensure the accuracy of the seismic data acquisition and then the reliability and the acquisition reliability of data. Due to the arrangement of a plurality of acquisition channels, random noise in data acquisition can be effectively suppressed by each of the acquisition channels corresponding to an appropriate number of seismic data acquisition elements, namely hydrophones, and more refined seismic signals can be obtained from a 32-bit analog-to-digital converter, so that the reliability and the credibility of the data are ensured, and good detection information can be obtained by exploration.

Although the preferred embodiments of the present invention have been described, additional changes and modifications may be made to these embodiments by those skilled in the art once the basic inventive concept is known. It is therefore intended that the appended claims be interpreted as including the preferred embodiments and all such changes and modifications falling within the scope of the present invention as defined by the appended claims.

It will be apparent to those skilled in the art that various alterations and variations can be made to the present invention without departing from the scope of the invention. Thus, it is intended that the present invention cover the alterations and variations of this invention provided they come within the scope of the appended claims.

## Claims

1. A marine seismic data acquisition control device (10), wherein the marine seismic data acquisition control device (10) comprises a power module, a control module, a communication module, a test module and a data module (100);
wherein the power module is an electric energy supply device of the marine seismic data acquisition control device (10) and is configured for converting electric energy into different voltages to be supplied to each component of the marine seismic data acquisition control device (10); the communication module is configured for executing data transmission and compilation and transmission channel equalization and management; the control module carries out data acquisition, storage, transmission and system self-detection according to a control instruction, stores a detection result according to requirements and transmits the detection result to a data transmission unit by the communication module; each marine seismic data acquisition control device (10) is connected with a number of data transmission units, and the data transmission unit is used for seismic data transmission; the data module (100) is configured for receiving seismic data acquired by a seismic data acquisition element and carrying out signal filtering, amplification, digitization and storage, the data module (100) comprises at least one data acquisition channel coupled to the seismic data acquisition element, each data acquisition channel including a 32-bit analog-to-digital converter, a switching circuit, a signal conditioning circuit, and a signal acquisition circuit; and the test module is configured for executing a performance test of the marine seismic data acquisition control device (10) and a performance test of the seismic data acquisition element comprising sending test waves by the test module according to an instruction, receiving the test waves by each of the data acquisition channels in the data module (100), and analyzing response waveforms of all the data acquisition channels for determining the consistency of the data acquisition channels;
and
the seismic data acquisition element comprises a hydrophone configured for performing acquisition of the seismic data and converting the seismic data into electrical signals, and the data module (100) carries out digital processing on the seismic data processed by the electrical signal by the 32-bit analog-to-digital converter, sends the seismic data to the control module for storage, the seismic data being sent to the data transmission unit by the communication module; and each of the data acquisition channels corresponds to at least one hydrophone;
each of the data modules (100) controls four of the data acquisition channels correspondingly, and each of the data acquisition channels corresponds to four to six hydrophones connected in series or in parallel;
a test wave is a sine wave or a sawtooth wave;
the power module comprises an input protection circuit for preventing circuit damage due to input over/under voltage and over/under current, and a voltage regulation circuit for performing voltage conversion to meet required operating voltages of each component of the marine seismic data acquisition control device (10).

2. The marine seismic data acquisition control device (10) according to claim 1, **characterized in that** the control instruction is sent by a multi-channel digital seismic acquisition main control to the control module via a streamer controller, and the power module draws electric energy from the streamer controller.

3. The marine seismic data acquisition control device (10) according to claim 2, **characterized in that** the main controller and the data processor of the control module are a high-performance embedded ARM.

4. The marine seismic data acquisition control device (10) according to any one of claims 1 and 2, **characterized in that** the communication module comprises a data transmission and distribution circuit, a drive circuit, a receiving circuit, and an equalization circuit.

## Patentansprüche

1. Steuervorrichtung (10) für die Erfassung seismischer Meeresdaten, wobei die Steuervorrichtung (10) für die Erfassung seismischer Meeresdaten ein Leistungsmodul, ein Steuermodul, ein Kommunikationsmodul, ein Testmodul und ein Datenmodul (100) umfasst, wobei das Leistungsmodul eine elektrische Energieversorgungseinrichtung der Steuervorrichtung (10) für die Erfassung seismischer Meeresdaten ist und so konfiguriert ist, dass es elektrische Energie in verschiedene Spannungen umwandelt, die den einzelnen Komponenten der Steuervorrichtung (10) für die Erfassung seismischer Meeresdaten zugeführt werden, das Kommunikationsmodul zum Ausführen der Datenübertragung und Kompilierung sowie zum Ausgleich und zur Verwaltung des Übertragungskanals konfiguriert ist; wobei das Steuermodul die Datenerfassung, -speicherung, -übertragung und Systemselbsterkennung gemäß einem Steuerbefehl durchführt, ein Erkennungsergebnis gemäß den Anforderungen speichert und das Erkennungsergebnis über das Kommunikationsmodul an eine Datenübertragungseinheit überträgt; wobei jede Steuervorrichtung (10) für die Erfassung seismischer Meeresdaten mit einer Anzahl von Datenübertragungseinheiten verbunden ist, wobei die Datenübertragungseinheit für die seismische Datenübertragung verwendet wird, wobei das Datenmodul (100) zum Empfangen von seismischen Daten, die von einem seismischen Datenerfassungselement erfasst werden, und zum Ausführen von Signalfilterung, Verstärkung, Digitalisierung und Speicherung konfiguriert ist, wobei das Datenmodul (100) mindestens einen Datenerfassungskanal umfasst, der mit dem seismischen Datenerfassungselement gekoppelt ist, wobei jeder Datenerfassungskanal einen 32-Bit-Analog/Digital-Wandler, eine Schaltschaltung, eine Signalaufbereitungsschaltung und eine Signalerfassungsschaltung umfasst, wobei das Testmodul zum Ausführen eines Leistungstests der Steuervorrichtung (10) für die Erfassung seismischer Meeresdaten und eines Leistungstests des seismischen Datenerfassungselements konfiguriert ist, der das Senden von Testwellen durch das Testmodul gemäß einer Anweisung, das Empfangen der Testwellen durch jeden der Datenerfassungskanäle in dem Datenmodul (100) und das Analysieren von Antwortwellenformen aller Datenerfassungskanäle zur Bestimmung der Konsistenz der Datenerfassungskanäle umfasst, wobei das seismische Datenerfassungselement ein Hydrophon umfasst, das so konfiguriert ist, dass es die Erfassung der seismischen Daten durchführt und die seismischen Daten in elektrische Signale umwandelt, und wobei das Datenmodul (100) eine digitale Verarbeitung der seismischen Daten durchführt, die durch das elektrische Signal durch den 32-Bit-Analog-Digital-Wandler verarbeitet werden, die seismischen Daten an das Steuermodul zur Speicherung sendet, wobei die seismischen Daten durch das Kommunikationsmodul an die Datenübertragungseinheit gesendet werden, und wobei jeder der Datenerfassungskanäle mindestens einem Hydrophon entspricht; wobei jedes der Datenmodule (100) entsprechend vier der Datenerfassungskanäle steuert, und wobei jeder der Datenerfassungskanäle vier bis sechs in Reihe oder parallel geschalteten Hydrophonen entspricht;
wobei eine Testwelle eine Sinuswelle oder eine Sägezahnwelle ist; und
wobei das Leistungsmodul eine Eingangsschutzschaltung zur Verhinderung von Schaltungsschäden aufgrund von Eingangsüber-/unterspannung und -über-/unterstrom und eine Spannungsregelungsschaltung zur Durchführung einer Spannungsumwandlung umfasst, um die erforderlichen Betriebsspannungen jeder Komponente der Steuervorrichtung (10) für die Erfassung seismischer Meeresdaten zu erfüllen.

2. Steuervorrichtung (10) für die Erfassung seismischer Meeresdaten nach Anspruch 1, **dadurch gekennzeichnet, dass** der Steuerbefehl von einer digitalen seismischen Mehrkanal-Hauptsteuerung über einen Streamer-Controller an das Steuermodul gesendet wird, und dass das Leistungsmodul elektrische Energie vom Streamer-Controller bezieht.

3. Steuervorrichtung (10) für die Erfassung seismischer Meeresdaten nach Anspruch 2, **dadurch gekennzeichnet, dass** der Hauptcontroller und der Datenprozessor des Steuermoduls ein hochleistungsfähiger eingebetteter ARM sind.

4. Steuervorrichtung (10) für die Erfassung seismischer Meeresdaten nach einem der Ansprüche 1 und 2, **dadurch gekennzeichnet, dass** das Kommunikationsmodul eine Datenübertragungs- und -verteilungsschaltung, eine Treiberschaltung, eine Empfangsschaltung und eine Ausgleichsschaltung umfasst.

## Revendications

1. Dispositif d'acquisition et contrôle de données sismiques marines (10), **caractérisé en ce que**, le dispositif d'acquisition et contrôle de données sismiques marines (10) comprend un module d'alimentation électrique, un module de contrôle, un module de communication, un module d'essai et un module de données (100);
dans lesquels, ledit module d'alimentation électrique est un dispositif d'alimentation en énergie électrique du dispositif d'acquisition et contrôle de données sismiques marines (10) et est configuré pour convertir l'énergie électrique en voltages différentes pour fournir à chaque pièce du dispositif d'acquisition et contrôle de données sismiques marines (10); ledit module de communication est configuré pour exécuter une transmission et une compilation de données, et une égalisation et une gestion à canaux de transmission; ledit module de contrôle effectue une acquisition, un stockage et une transmission de données, et une auto-détection de système en fonction d'une instruction de contrôle, enregistre un résultat de détection en fonction des besoins et transmet le résultat de détection à une unité de transmission de données par ledit module de communication; chaque dispositif d'acquisition et contrôle de données sismiques marines (10) se connecte à plusieurs unités de transmission de données, et l'unité de transmission de données est utilisée pour une transmission de données sismiques, ledit module de données (100) est configuré pour recevoir des données sismiques acquises par un élément d'acquisition de données sismiques, et effectuer un filtrage, une amplification, une numérisation et un stockage à signaux, ledit module de données (100) comprend au moins un canal d'acquisition de données couplé audit élément d'acquisition de données sismiques, chaque canal d'acquisition de données comprend un convertisseur analogique-numérique de 32 bits, un circuit de commutation, un circuit de conditionnement de signal et un circuit d'acquisition de signal ; le dit module d'essai est configuré pour exécuter un essai de performance du dispositif d'acquisition et contrôle de données sismiques marines (10) et un essai de performance dudit élément d'acquisition de données sismiques comprenant les étapes de : envoyer des ondes d'essai par ledit module d'essai en fonction d'une instruction, capter les ondes d'essai par chaque canal d'acquisition de données dans ledit module de données (100), et analyser des formes d'onde de réponse de tous les canaux d'acquisition de données afin de déterminer la cohérence des canaux d'acquisition de données;
et
ledit élément d'acquisition de données sismiques comprend un hydrophone configuré pour effectuer une acquisition des données sismiques et convertir les données sismiques en signaux électriques, ledit module de données (100) effectue un traitement numérique sur les données sismiques traitées au moyen du signal électrique par le convertisseur analogique-numérique de 32 bits, et envoie les données sismiques audit module de commande pour les enregistrer, les données sismiques sont envoyées à l'unité de transmission de données par ledit module de communication; et chaque canal d'acquisition de données correspond à au moins un hydrophone;
chaque module de données (100) contrôle quatre des canaux d'acquisition de données en conséquence, et chaque canal d'acquisition de données correspond à quatre à six hydrophones qui se connectent en série ou en parallèle;
une onde d'essai est une onde sinusoïdale ou une onde dentelée;
ledit module d'alimentation électrique comprend un circuit de protection d' alimentation pour éviter d'endommager le circuit à cause d'une alimentation sur/sous un voltage et sur/sous un courant, un circuit de régulation de tension pour effectuer une conversion de tension afin de satisfaire aux tensions de fonctionnement nécessaires à chaque pièce du dispositif d'acquisition et contrôle de données sismiques marines (10).

2. Dispositif d'acquisition et contrôle de données sismiques marines (10) selon la revendication 1, **caractérisé en ce que**, l'instruction de contrôle est envoyée par un contrôleur principale d'acquisition sismique numérique multicanal audit module de commande via un contrôleur de streameur, et ledit module d'alimentation électrique tire l'énergie électrique du contrôleur de streameur.

3. Dispositif d'acquisition et contrôle de données sismiques marines (10) selon la revendication 2, **caractérisé en ce que**, le contrôleur principal et le processeur de données dudit module de contrôle sont un ARM intégré de haute performance.

4. Dispositif d'acquisition et contrôle de données sismiques marines (10) selon la revendication 1 ou 2, **caractérisé en ce que**, ledit module de communication comprend un circuit de transmission et distribution de données, un circuit d'entraînement, un circuit de réception et un circuit d'égalisation.
